# EUROPÄISCHE PATENTANMELDUNG

(11) **EP 2 098 401 A1**
(43) Veröffentlichungstag der Anmeldung: **09.09.2009**
(21) Anmeldenummer: 09003946.2
(22) Anmeldetag: 04.05.2005
(51) Int. Cl.: B60K 11/08

(54) **Pneumatisch aufblasbares Bauteil eines Fahrzeuges als Teil des Motorgitters des Fahrzeuges**

(30) Priorität: 10.05.2004 CH 8182004
(62) Teilanmeldung aus: 05405337.6
(71) Anmelder: Protoscar SA, 6821 Rovio (CH)
(72) Erfinder: Piffaretti, Marco, 6821 Rovio (CH)
(74) Vertreter: Gaggini, Carlo

(57) **Zusammenfassung**

Die Erfindung betrifft pneumatisch aufblasbare und ortsfest auf einem Fahrzeug (1) montierte Bauteile, vorzugsweise auf einem Personenwagen, als Teil des Motorgitters des Fahrzeuges.

Die Erfindung sieht vorzugsweise vor, dass das aufblasbare Teil 16 auf einer äusseren Stelle der Karosserie des Fahrzeuges (1) montiert ist und dass es, nach dem Aufpumpen, eine Schutzfunktion für das Fahrzeug (1) ausübt, bzw. die Zuverlässigkeit des Fahrzeuges (1) erhöht.

Das pneumatisch aufblasbare Bauteil kann, je nach Gebrauch von Hand durch eine Handpumpe oder automatisch durch einen Luftkompressor aufgepumpt werden, der von einem oder mehreren Sensoren betätigt wird, welche die Einsatzbedingungen des aufblasbaren Teiles bestimmen.

## Beschreibung

Die vorliegende Erfindung betrifft ein pneumatisch aufblasbares Bauteil gemäss Patentanspruch 1.

Die Verwendung von pneumatisch aufblasbaren Teilen, Airbags genannt, welche im Wageninnenraum und auch auf der Innenseite der Wagentüren befestigt werden, ist in der Automobilindustrie, besonders in der Fabrikation von Personenwagen, üblich geworden.
Diese Airbags haben eine ganz bestimmte Funktion, d.h. sie müssen im Falle eines Aufpralls gegen ein Hindernis blitzschnell, fast explosiv, aufgepumpt werden, um eine Art Schutzmatratze für den Fahrer oder für die Insassen des Wagens zu bilden.

Die Airbags sind Einwegteile, d.h. sie können nur einmal aufgepumpt und müssen nach Gebrauch ersetzt werden. In der Tat, ihre Reaktionsgeschwindigkeit ist notwendig, weil davon ihre Schutzwirksamkeit abhängt. Das Aufpumpen der Airbags kann also nur durch "Explosion" eines unter Druck stehenden Gasbehälters geschehen.

Die Erfindung richtet sich auch nach der heutzutage immer grösseren Verwendung von pneumatisch aufblasbaren Teilen für die verschiedensten Zwecke: denkt man nur an aufblasbare Luftmatratzen, an aufblasbare Luftkissen für die verschiedensten Anwendungen, um Körperteile zu stützen, aber auch an patentrechtlich bekannte, pneumatisch aufblasbare Bauteile als Unfallschutz und Aerodynamikfunktion ausübende Teile der Karosserie eines Fahrzeuges (siehe US 4,815,777, DE4308021, US 4,441,751, DE202004001 682 oder DE 103 16 847) oder pneumatisch aufblasbares Bauteil an einem Fahrzeug zum Schutz des Fahrzeuges gegen Kollision (siehe z.B. GB 2 281 718).

Man weiss auch von besonderen Realisierungen, wie zum Beispiel ein Flugzeug mit aufblasbaren Flügeln oder sogar ein luftdichter Reissverschluss, dank der Eigenschaft, dass er mit Druck pneumatisch geschlossen wird.

Die vorliegende Erfindung beabsichtigt, all diese in den verschiedensten Gebieten erworbenen Kenntnisse zu nutzen und sie anzuwenden, um Sicherheit, Komfort und Wirtschaftlichkeit der Fahrzeuge, insbesondere der Personenwagen, zu verbessern. Generell beabsichtigt die Erfindung, dem Hersteller im Zusammenhang mit der Anwendung von pneumatisch aufblasbaren Bauteilen eine Möglichkeit vorzuschlagen, welche es erlaubt, folgenden Vorteil zu erzielen:
- die Betriebsbedingungen des Fahrzeuges zu steigern, z.B. die Motorkühlung.

Die innovative Seite der vorliegenden Erfindung besteht wesentlich darin, dass das pneumatisch aufblasbare Teil an einem äusseren Teil der Karosserie fest angebracht wird und deshalb keine direkte Schutzfunktion für die Benutzer des Fahrzeuges hat, eine Funktion welche von den jetzigen Airbags ausgezeichnet erfüllt wird.

Das pneumatisch aufblasbare Bauteil kann dann durch den Benutzer handbetätigt mittels einer Luftpumpe (oder eines Luftkompressors) aufgepumpt werden, oder automatisch gemäss einer anderen Variante, je nach Bedarf des Teiles selbst. Anders gesagt: das aufblasbare Teil kann durch den Benutzer aufgepumpt werden, wenn er dies für zweckmässig hält, oder das Aufpumpen kann automatisch mittels einer gesteuerten Pumpe erfolgen.

Entsprechend den vorgesehenen erfinderischen Anwendungen des pneumatisch aufblasbaren Teiles begreift man sofort, dass das Aufpumpen desselben normalerweise langsam geschieht und im Wesentlichen in verschiedenen, getrennten Stufen, das heisst in total entgegengesetzter Art und Weise als dasjenige der Airbags im Inneren des Fahrzeuges, für welche die Geschwindigkeit des Aufpumpens ein grundlegender Parameter ist. Eben diese relative Langsamkeit ermöglicht es, für diese Arbeit eine kleine Pumpe oder einen Kompressor, oder sogar, für einen bestimmten beschränkten Gebrauch, eine Handpumpe einzusetzen. Nicht jeder Gebrauch des erfinderischen aufblasbaren Teiles ist nämlich dazu vorgesehen, während der Fahrt betätigt zu werden. Wie nachfolgend erklärt wird, gibt es Einsätze, welche ohne weiteres erlauben, oder sogar verlangen, dass das aufblasbare Teil bei stillstehendem Wagen betätigt wird: in solchen Fällen kann eine Handpumpe als einfache und nicht sehr teure Lösung in Betracht gezogen werden.

Die Erfindung ist nun mit Hilfe einiger Realisationsbeispiele und deren Abbildungen im Detail beschrieben.

Die Bilder zeigen:
- Bild 1 ein aufblasbares Teil, das einen Teil des Lüftungsgitters eines Fahrzeuges bildet und welches in offener Stellung steht, um mehr Kühlluft durchzulassen,
- Bild 2 den Teil des Bildes 1 in geschlossener Stellung, um weniger Kühlluft durchzulassen.

Bevor wir näher auf die Einzelheiten der Bilder eingehen, machen wir darauf aufmerksam, dass die abgebildeten erfinderischen aufblasbaren Teile in allen Bildern kreuzweise schraffiert wurden, um sie leichter erkenntlich zu machen. Praktisch wurde für die Bilder immer der gleiche Fahrzeugtyp angewendet, aber es versteht sich, dass die Erfindung für jeden Fahrzeugtyp angewendet werden kann, sei er Limousine, Kombiwagen, Pick-Up, Transporter oder Lastwagen, indem man für jede Anwendung das aufblasbaren Teil (oder die Teile) aussucht, welches (welche) gemäss Erfindung zu diesem Zweck besser geeignet ist (sind).

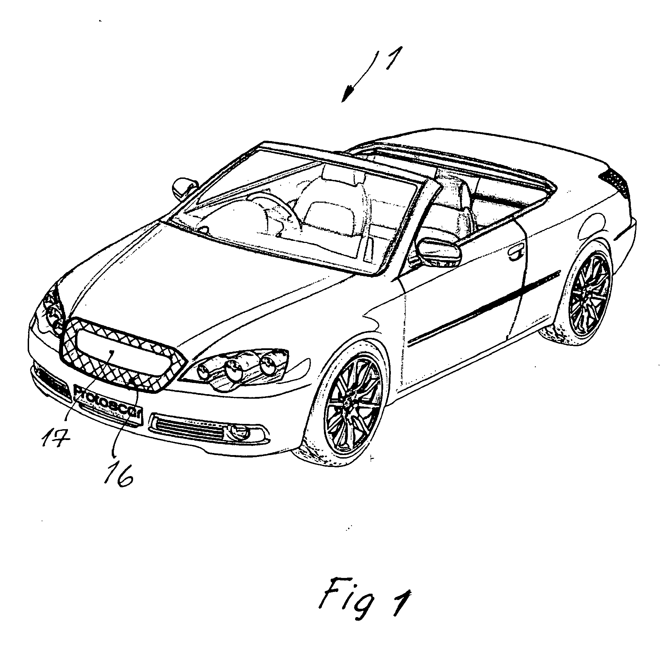

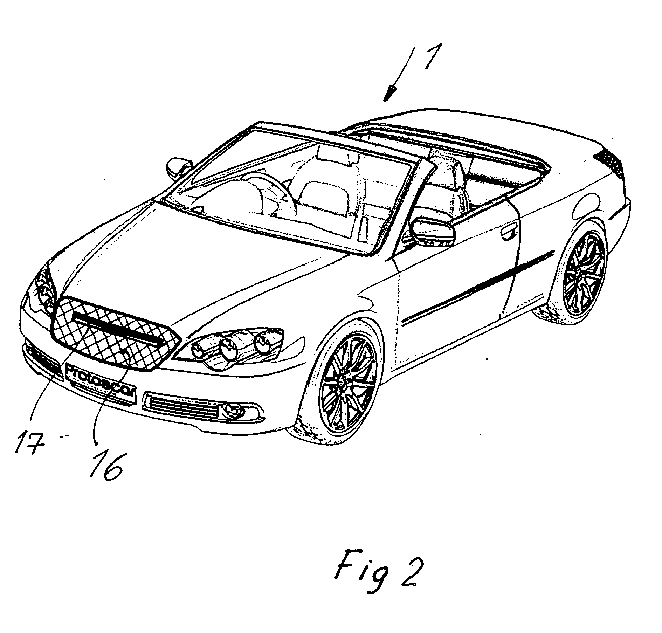

Die Bilder 1 und 2 zeigen eine bevorzugte Realisationsvariante der Erfindung, welche die Betriebsbedingungen des Motors betrifft, hauptsächlich die Kühlluftregelung des Kühlers je nach Aussentemperatur und Motorleistung.
Zu diesem Zweck sieht die Erfindung vor, dass das Motorgitter 16 des Fahrzeuges 1, beziehungsweise das Lufteinlassgitter, als pneumatisch aufblasbares Teil realisiert wird. Somit würde man ermöglichen, die Motorkühlluftzufuhröffnung 17, je nach grösserem oder geringerem Aufpumpgrad, mehr oder weniger zu schliessen. Im Bild 1 ist das aufblasbare Teil 16 des Gitters wenig aufgeblasen, folglich ist die Öffnung 17 weit und lässt viel Luft durch (z.B. wenn die Aussenlufttemperatur hoch ist), während im Bild 2 das aufblasbare Teil 16 des Gitters voll aufgepumpt ist, folglich ist die Öffnung 17 eingeschränkt und lässt ein Luftminimum durch (Winterbetrieb). Auch in diesem Falle sind die Betriebsmechanismen des aufblasbaren Gitters 16 (Aussen- und Motorluftsensor, Krompressor der Aufpumpluft) sowie die Baudetails des aufblasbaren Gitters 16 (Anzahl der Luftschläuche, deren Stellung, usw.) nicht Objekt der vorliegenden Erfindung und werden deshalb nicht ausführlich beschrieben.

Was die Werkstoffe betrifft, aus welchen die Realisation des pneumatisch aufblasbaren Teiles laut dieser Erfindung vorteilhafterweise gefertigt wären, wollen wir hier nur klarstellen, dass der in den vorangehenden Bildern 1 bis 2 beschriebene pneumatisch aufblasbare Teil vorzugsweise erfinderisch aus Polyvinylchlorid (PVC) besteht. Wir denken an spinnfaserverstärktes PVC, das widerstandsfähig ist gegen die Einwirkung von Ultraviolettstrahlen, Temperaturen zwischen - 60° und + 80° aushält, gegen Säuren, und dazu noch knitterfest ist. Der Fachmann wird ohne weiteres biegsames, nicht elastisches Material finden, das diese Bedingungen erfüllt, braucht er doch nur auf die umfassenden, auf diesem Gebiet gemachten Erfahrungen zurückgreifen, nämlich auf vielen, der Erfindungsidee nahen und anfangs genannten Gebieten.

Wir haben mehrfach darauf hingewiesen, dass die Vorrichtungen, mit welchen die pneumatisch aufblasbaren Bauteile laut Erfindung betätigt werden, verschiedene Typen sein dürfen, z.B. manuell oder automatisch oder von Sensoren angetrieben, welche unter bestimmten vorgegebenen Aussenbedingungen reagieren.

Die Vorteile der Erfindung sind vielfältig und unterschiedlich, je nach den Problemen, die sie zu lösen ermöglicht. Generell können wir behaupten, dass dank den pneumatisch aufblasblaren Bauteilen, der Autohersteller über ein innovatives System verfügt, das sich auf grosse Erfahrung in Parallelsektoren zum Automobilsektor stützt. Dies insbesondere, um die Probleme des Treibstoffverbrauchs in Angriff zu nehmen, all dies mit der Verwendung von relativ einfachen und wenig teuren, ausserdem leichten und anpassungsfähigen Mitteln, welche eine Technologie bietet wie diejenige der aufblasbaren Teile, heutzutage weitverbreitet und deshalb gut bewährt.

## Patentansprüche

1. Pneumatisch aufblasbare Bauteil eines Fahrzeuges,
welcher mittels einer motorisierten Pumpe oder von Hand aufgepumpt werden kann,
**dadurch gekennzeichnet, dass**
der aufblasbare Bauteil einen Teil des Motorgitters (16) des Fahrzeuges bildet, der mehr oder weniger die Motokühlluftzufuhröffnung (17) schliesst, je nach grösserem oder geringerem Aufpumpgrad.

2. Pneumatisch aufblasbares Bauteil nach Anspruch 1,
**dadurch gekennzeichnet, dass**
das Aufpumpen mittels einer Pumpe geschieht, welche durch einen elektrischen Motor betätigt wird.

3. Pneumatisch aufblasbares Bauteil nach Anspruch 2,
**dadurch gekennzeichnet, dass**
die Inbetriebsetzung des Aufpumpens automatisch je nach Bedarf des Teiles selbst durch einen Sensor geschieht, welcher dessen Nützlichkeit feststellt.

4. Pneumatisch aufblasbares Bauteil nach Anspruch 1,
**dadurch gekennzeichnet, dass**
das aufblasbare Bauteil (16) aus einem spinnfaserverstärkten Kunststoff besteht, der widerstandsfähig gegen die Einwirkung von Ultraviolettstrahlen ist, Temperaturen zwischen - 60° und + 80° aushält, widerstandsfähig gegen Säuren und dazu noch knitterfest ist.
